# EUROPÄISCHE PATENTSCHRIFT

(11) **EP 4 366 592 B1**
(45) Veröffentlichungstag und Bekanntmachung des Hinweises auf die Patenterteilung: **24.07.2024**
(21) Anmeldenummer: 23783741.4
(22) Anmeldetag: 28.09.2023
(51) Int. Cl.: A47J 43/25

(54) **VERFAHREN UND VORRICHTUNG ZUM HERSTELLEN EINER SUSPENSION**
METHOD AND DEVICE FOR PRODUCING A SUSPENSION
PROCÉDÉ ET DISPOSITIF DE PRODUCTION DE SUSPENSION

(30) Priorität: 30.09.2022 DE 102022003642; 16.03.2023 DE 102023106580
(43) Veröffentlichungstag der Anmeldung: 15.05.2024
(73) Patentinhaber: Mallinowski, Ivan, 41849 Wassenberg (DE)
(72) Erfinder: Mallinowski, Ivan, 41849 Wassenberg (DE)
(74) Vertreter: Bauer, Dirk
(86) Internationale Anmeldenummer: PCT/EP2023/076933
(87) Internationale Veröffentlichungsnummer: WO 2024/068861

(56) Entgegenhaltungen:
- DE-B3- 102021 104 742
- US-A- 4 962 693
- US-A1- 2021 086 145

## Beschreibung

Die Erfindung betrifft zunächst ein Verfahren zum Herstellen einer Suspension, wobei mittels einer Pumpe Wasser aus einem Vorratsbehälter durch eine Mischkammer gefördert wird und Pflanzenteile von echten Nüssen, Kernen, Getreide und/oder weiteren Samen mittels eines Zerkleinerungselements mechanisch zerkleinert und in der Mischkammer mit dem Wasser vermischt werden und die Mischung durch einen Filter gepresst wird, der die Suspension durchlässt und einen von den Pflanzenteilen verbleibenden Trester zurückhält. Die Erfindung betrifft weiter eine Vorrichtung zum Herstellen einer Suspension mit einem Zerkleinerungselement zum Zerkleinern von Pflanzenteilen von echten Nüssen, Kernen, Getreide und/oder weiteren Samen, einer Mischkammer zum Mischen der zerkleinerten Pflanzenteile mit Wasser, einem Filter, der die Suspension durchlässt und einen von den Pflanzenteilen verbleibenden Trester zurückhält, und einer Pumpe zum Pressen des Wassers aus einem Vorratsbehälter durch die Mischkammer und den Filter.

Ein solches Verfahren und eine solche Vorrichtung sind aus DE 10 2021 104 742 B3 bekannt. In gattungsgemäßen Verfahren werden die Pflanzenteile in der Mischkammer mechanisch zerkleinert. Die Frische der Pflanzenteile und die darin enthaltenen Vitamine und Nährstoffe bleiben so im Wesentlichen bis unmittelbar vor Herstellung der Suspension erhalten.

### Aufgabe

Der Erfindung liegt die Aufgabe zugrunde, die Vorrichtung zu vereinfachen.

### Lösung

Ausgehend von dem bekannten Verfahren wird nach der Erfindung vorgeschlagen, dass ein Pumpenrad der Pumpe das Zerkleinerungselement ist. Indem das Pumpenrad auch die Funktion des Zerkleinerungselements übernimmt, benötigt dieses keinen weiteren Antrieb. Die Vorrichtung wird so signifikant vereinfacht.

Pumpen mit Pumpenrad sind in Form von Kreiselpumpen allgemein bekannt: Die Kreiselpumpe ist eine besonders einfache und robuste Strömungsmaschine mit einer rotierenden Welle, die dynamische Kräfte zur Förderung der Mischung aus Wasser und Pflanzenteilen nutzt. Die Ausführung als Radialpumpe - also mit radialem Austritt aus der Pumpe - begünstigt die Propellerwirkung des Pumpenrads.

Vorzugsweise strömt in einem erfindungsgemäßen Verfahren die Suspension aus der Mischkammer unmittelbar in einen Auffangbehälter. Der Auffangbehälter kann nach Herstellung der Suspension als Tisch- oder Trinkgefäß für die Suspension genutzt werden. In einem industriellen Prozess kann die Suspension kontinuierlich in eine Abfüllanlage geleitet werden.

Vorzugsweise ist in einem erfindungsgemäßen Verfahren der Vorratsbehälter zugleich der Auffangbehälter. Die Pflanzenteile werden so im Kreislauf mit einer definierten Wassermenge vermischt.

Vorzugsweise werden in einem erfindungsgemäßen Verfahren die Pflanzenteile in Form einer Tablette gepresst und getrocknet und die Tablette wird in die Mischkammer eingebracht und mittels des Zerkleinerungselements zerkleinert.

Ausgehend von der bekannten Vorrichtung wird nach der Erfindung vorgeschlagen, dass ein Pumpenrad der Pumpe das Zerkleinerungselement ist. Die erfindungsgemäße Vorrichtung erlaubt die Ausführung des erfindungsgemäßen Verfahrens und zeichnet sich daher gleichermaßen durch dessen vorstehend erläuterte Vorteile aus.

Eine erfindungsgemäße Vorrichtung kann insbesondere ein Anbauteil für einen handelsüblichen Stab- oder Standmixer sein. Alternativ kann eine erfindungsgemäße Vorrichtung einen integrierten Antrieb aufweisen.

Vorzugsweise ist in einer erfindungsgemäßen Vorrichtung das Zerkleinerungselement eine Raspel. Die Raspel kann insbesondere aus Edelstahl oder Oxidkeramik einstückig an das Pumpenrad angeformt oder mit einem Grundkörper des Pumpenrads aus Kunststoff verklebt sein. Edelstahl und Oxidkeramik weisen einen besonders geringen Verschleiß auf. Die Raspel kann eine radiale oder spiralige Verzahnung aufweisen. Alternativ kann eine Raspel ohne regelmäßige Verzahnung beispielsweise aus lebensmittelechtem Schleifpapier bestehen.

Schneid-, Reib- und Raspelflächen können zusätzlich innen am Gehäuse, am Filter und/oder am Pumpenrad ausgebildet sein, um den Brei fortwährend zu zerkleinern.

Vorzugsweise ist in einer erfindungsgemäßen Vorrichtung der Filter ein Spalt mit einem Spaltmaß von höchstens 0,5 mm. Ein solcher Spalt hält Bestandteile der Suspension zurück, die das Spaltmaß überschreiten und wirkt so als Filter. Wenn der Spalt in radialer Richtung zwischen Pumpenrad und Gehäuse ausgebildet ist, prägt das Pumpenrad in dem Spalt durch Adhäsion und Viskosität der Suspension nach dem Prinzip der Tesla-Pumpe eine radiale Strömung auf. Der durchströmte Querschnitt des Filters bestimmt die Verweildauer der Suspension in der Mischkammer. Insbesondere weist der Spalt eine Höhe von höchstens 0,2 mm auf. Die Suspension ist dann bei Austritt aus dem Filter trinkfertig. Alternativ kann die Vorrichtung nach Austritt aus dem Filter über eine oder mehrere weitere Filterstufen geführt werden.

Alternativ vorzugsweise ist in einer erfindungsgemäßen Vorrichtung der Filter ein gelochtes Metallblech. Ein gelochtes Blech kann zum einen - durch Wahl der Anzahl und Geometrie der Löcher - gut an das jeweils gewünschte erfindungsgemäße Verfahren angepasst werden. Die Löcher können eine Formschräge aufweisen, um ein Verstopfen zu vermeiden. Die glatte Oberfläche des Blechs erleichtert dessen Reinigung. Weiter alternativ kann der Filter ein Drahtsieb, ein Tuch oder ein Vlies oder eine Kombination aus den Alternativen sein.

Weiter vorzugsweise begrenzt in einer solchen erfindungsgemäßen Vorrichtung das Pumpenrad den Spalt. An der engsten Stelle des Spalts wird die Suspension dann unmittelbar von dem Pumpenrad durch den Spalt und - da das Pumpenrad zugleich das Zerkleinerungselement ist - durch die zerkleinerten Pflanzenteile gepresst.

Vorzugsweise weist in einer erfindungsgemäßen Vorrichtung die Mischkammer in einer vertikalen Achsrichtung einen konstanten, endlich drehsymmetrischen Querschnitt auf. Eine im Querschnitt, insbesondere in Form einer Tablette an die Mischkammer angepasste Portion der Pflanzenteile wird dann durch Formschluss an der Rotation um die Achsrichtung gehindert. Weiter vorzugsweise ist der Querschnitt höchstens sechszählig. Die Zähligkeit ist die Anzahl fester Drehwinkel um eine zentrale Achse unterhalb des Vollwinkels, in denen eine geometrische Figur auf sich selbst abgebildet wird.

Vorzugsweise weist eine solche erfindungsgemäße Vorrichtung einen in der Mischkammer axial bewegliches und die Mischkammer unter den Pflanzenteilen überwiegend schließendes Treibelement auf. Das Treibelement kann insbesondere einen Treibspiegel aufweisen. Die Pumpe saugt dann den Treibspiegel an, der die Pflanzenteile nach oben in die Mischkammer drückt. Der Treibspiegel kann einen oder mehrere Durchbrüche aufweisen, durch die das Wasser aus dem Vorratsbehälter in die Mischkammer strömen kann. Insbesondere kann eine aus den Pflanzenteilen gepresste Tablette den Durchbrüchen entsprechende Kanäle aufweisen, die das Wasser zur Oberseite der Mischkammer führen.

Alternativ können in einer einfacheren erfindungsgemäßen Vorrichtung ohne Treibelement die Pflanzenteile in einer hierfür angepassten Tablette eingesetzt werden, die aufgrund ihrer Form von der Pumpe angesaugt wird. Die Tablette kann hierzu unten einen radial vorstehenden Rand aufweisen, der von einer vorzugsweise flexiblen Verengung in der Mischkammer als Rest zurückgehalten wird, ohne in den Vorratsbehälter zurückzufallen. Weiter kann eine solche Tablette unten in der Achse eine trichterförmige Öffnung aufweisen, so dass zum Ende des Verfahrens von der Tablette nur noch ein äußerer Rand verbleibt und angesaugt wird.

Vorzugsweise sind in einer erfindungsgemäßen Vorrichtung der Antrieb, ein Gehäuse mit der Mischkammer, das Pumpenrad und/oder der Vorratsbehälter mittels Wechselverbindungen, insbesondere Klipp-, Klemm-, Klammer-, Magnet- oder Bajonettverbindungen verbunden. Die Einzelteile lassen sich dann manuell einfach trennen, nach Gebrauch reinigen und wieder zusammensetzen.

Eine erfindungsgemäße Vorrichtung kann einen insbesondere variablen Durchflussbegrenzer für die aus dem Filter austretende Suspension aufweisen. Der Durchflussbegrenzer kann insbesondere einen oder mehrere Spalte mit einstellbarer Breite und/oder Länge aufweisen. Die Verweildauer der Mischung in der Mischkammer kann dann für unterschiedliche Suspensionen individuell eingestellt werden.

Vorzugsweise liegen in einem solchen erfindungsgemäßen Verfahren die Pflanzenteile als Brocken vor. Brocken sind stückige Teile mit der ursprünglichen makroskopischen Struktur der Pflanzenteile, insbesondere mit Korngrößen mindestens teilweise im Millimeterbereich und größer. Als Brocken werden im Rahmen dieser Anmeldung sowohl ganze als auch geschredderte Nüsse, Kerne, Getreidekörner und weitere Samen verstanden.

Vorzugsweise sind in einem erfindungsgemäßen Verfahren die Pflanzenteile in Form einer Tablette gepresst, und werden sukzessiv von der Tablette abgeraspelt und von dem Wasser zu dem Filter gespült. Die Tablettenform vereinfacht die Dosierung und verbessert die Lagerfähigkeit der Pflanzenteile.

Vorzugsweise sind in einem erfindungsgemäßen Verfahren die Pflanzenteile luftgetrocknet, grob geschreddert, gemälzt, gebrannt, mindestens anteilig beispielsweise enzymatisch aufgeschlossen und/oder gesüßt. Die Lufttrocknung schont die wertvollen natürlichen Inhaltsstoffe der Pflanzenteile. Alternativ kommen andere Trocknungsverfahren, insbesondere die Gefriertrocknung in Betracht. Letztere verkürzt signifikant den Trockenprozess.

Vorzugsweise werden in einem solchen erfindungsgemäßen Verfahren die Pflanzenteile mindestens anteilig vor dem Trocknen in Wasser eingeweicht. In dem Brei quellen die Pflanzenteile und können in der Folge leichter verarbeitet werden. Das Quellen kann durch eine leichte Temperierung des Breis auf 50 bis 60 °C unterstützt werden.

Weiter vorzugsweise werden in einem erfindungsgemäßen Verfahren die Pflanzenteile unter einer inerten Atmosphäre, insbesondere unter Stickstoff getrocknet. So wird während der Trocknung der Eintrag von Keimen in die Pflanzenteile vermieden.

Durch das Schreddern wird einerseits die genaue Portionierung insbesondere von großen Nüssen, Kernen, Getreide oder Samen und andererseits das Zerkleinern bei der Herstellung des Getränks beschleunigt. Alternativ können mindestens anteilig ganze Nüsse, Kerne, Getreidekörner und weitere Samen in die Tablette eingebunden werden.

Durch das Aufschließen werden zuvor unlösliche Inhaltsstoffe der Pflanzenteile derart verändert, dass sie sich in Wasser leichter verteilen. Zum Aufschließen können die Pflanzenteile insbesondere gedämpft, geröstet, gekeimt, fermentiert oder vergärt werden.

Durch die Süßung wird der Geschmack des Getränks verbessert. Insbesondere können Stärke und langkettige Zucker wie Glucose in den Pflanzenteilen enzymatisch aufgebrochen und in kurzkettige Zucker wie Fructose umgewandelt oder Süßmittel zugesetzt werden.

Vorzugsweise umfassen in einem erfindungsgemäßen Verfahren die Pflanzenteile trockene Bestandteile wie Schalen, Hüllen, Hülsen, Spelzen oder Grannen. Die trockenen Bestandteile begünstigen die Selbstreinigung des Filters durch die darüber strömende Mischung.

Vorzugsweise wird in einem erfindungsgemäßen Verfahren der Suspension ein Bindemittel, ein Emulgator, ein Öl, ein Fett und/oder Salz zugesetzt. Ein Bindemittel hält eine Portion der Pflanzenteile besser ihre Form. In Betracht kommen insbesondere pflanzliche Bindemittel wie Stärke oder Guarkernmehl. Ein Emulgator vermeidet ein Entmischen der hergestellten Suspension. Als Emulgator kommt insbesondere Lecithin in Betracht. Öl steigert den Fettgehalt der Suspension und bildet mit dem Wasser eine Emulsion, die haptisch der natürlichen tierischen Milch ähnelt. Das Öl kann mit den Pflanzenteilen gemischt oder in einer oder mehreren Kapseln zugefügt werden, die beim Herstellen der Suspension mit den Pflanzenteilen mechanisch zerkleinert werden. Zucker, zuckerfreie Süßungsmittel und Salz verbessern die Lagerfähigkeit der Tablette und wirken zudem in der Suspension als Geschmacksverstärker.

### Ausführungsbeispiele

Die Erfindung wird nachfolgend anhand von Ausführungsbeispielen erläutert. Es zeigen
- Fig. 1a/b: eine erste erfindungsgemäße Vorrichtung bei der Vorbereitung für ein erfindungsgemäßes Verfahren,
- Fig. 2a-c: bei der Ausführung des Verfahrens und
- Fig. 3a/b: zerlegt in ihre Einzelteile,
- Fig. 4a/b: eine zweite erfindungsgemäße Vorrichtung bei der Vorbereitung eines anderen erfindungsgemäßen Verfahrens,
- Fig. 5a/b: bei der Ausführung des Verfahrens und
- Fig. 6a/b: in die Einzelteile zerlegt.
- Fig. 7a: eine erste erfindungsgemäße Vorrichtung,
- Fig. 7b: eine Explosionsdarstellung der ersten Vorrichtung,
- Fig. 7c: einen Schnitt durch die erste Vorrichtung,
- Fig. 7d: ein Detail des Schnitts,
- Fig. 8a: eine zweite erfindungsgemäße Vorrichtung,
- Fig. 8b: einen Schnitt durch die zweite Vorrichtung und
- Fig. 8c: die Einzelteile der zweiten Vorrichtung,
- Fig. 9a: eine dritte erfindungsgemäße Vorrichtung,
- Fig. 9b: einen Schnitt durch die dritte Vorrichtung und
- Fig. 9c: die Einzelteile der dritten Vorrichtung.

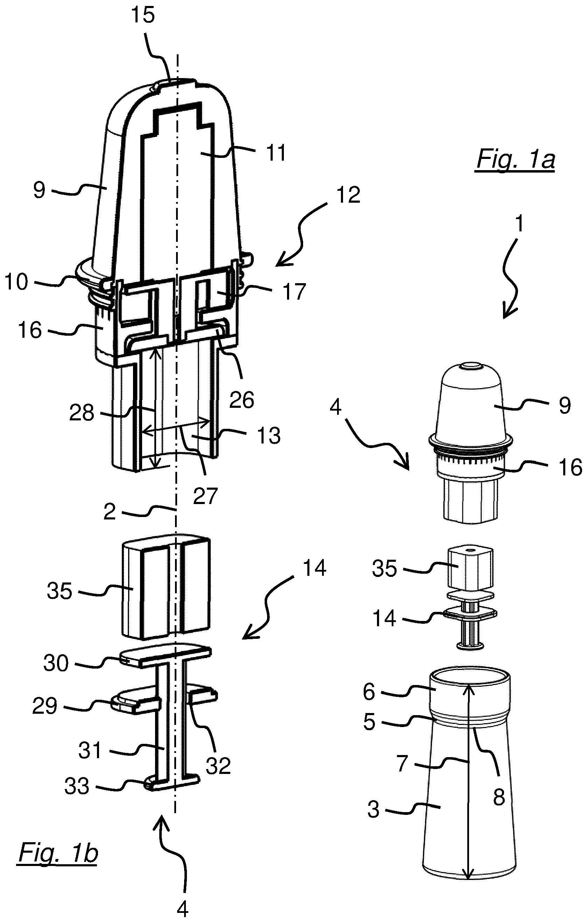

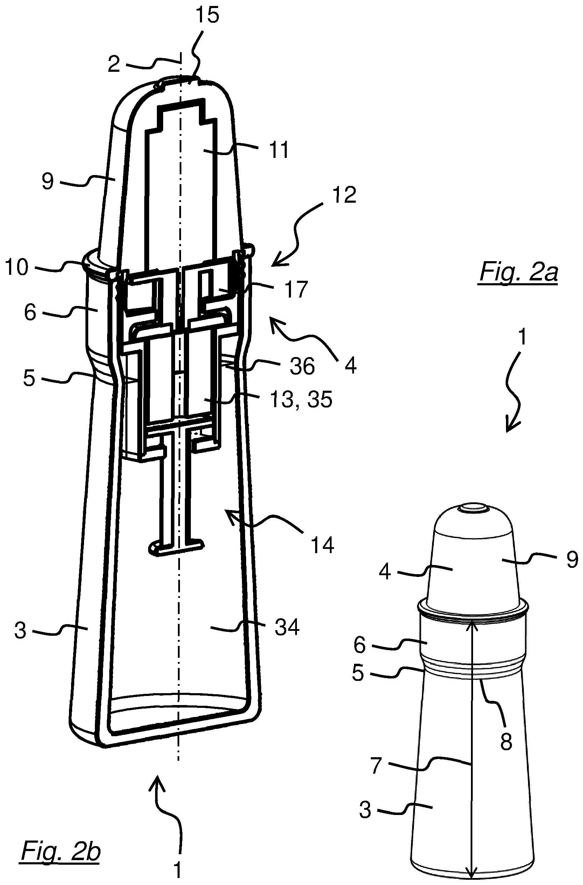

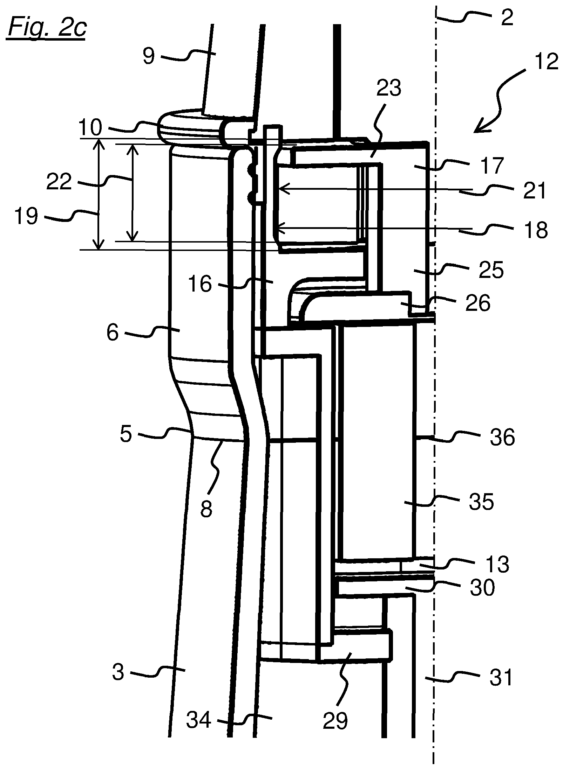

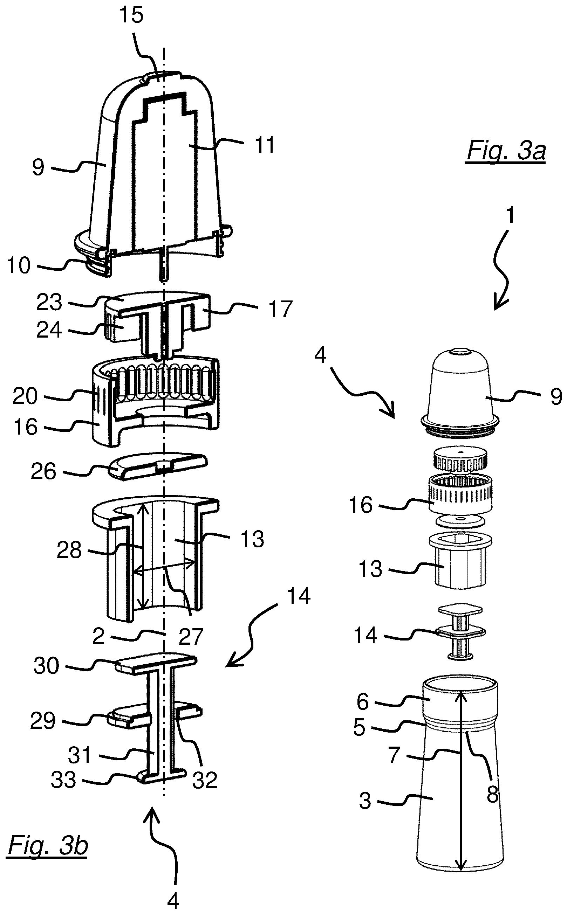

Die in Figur 1a in einer perspektivischen Ansicht schräg von oben geöffnet gezeigte erste erfindungsgemäße Vorrichtung 1 ist um eine Hochachse 2 rotationssymmetrisch. Sie besteht aus einem gläsernen Vorratsbehälter 3 und einer darüber angeordneten, in Figur 1a längs der Hochachse 2 geschnitten gezeigten Mischeinheit 4. Die geschlossene Vorrichtung 1 ist in Figur 2a und wiederum längs der Hochachse 2 geschnitten in Figur 2b sowie in einem Detail in Figur 2c dargestellt. Figur 3a und ein geschnittenes Detail in Figur 3b zeigen die Einzelteile der Vorrichtung 1 in einer Explosionsdarstellung.

Der Vorratsbehälter 3 läuft zunächst nach oben bis zu einer Griffmulde 5 konisch zu und endet in einem gegenüber der Griffmulde 5 leicht aufgeweiteten, zylindrischen Rand 6. Der Vorratsbehälter 3 weist eine Höhe 7 von 23 cm und bis zu einer Füllmarke 8 ein Fassungsvermögen von 1000 ccm auf. Die Mischeinheit 4 besteht aus einem glockenförmiges Gehäuse 9 mit einer ringförmigen Dichtung 10 zu dem Vorratsbehälter 3, einem Antrieb 11, einer von diesem angetriebenen Pumpe 12, einer Mischkammer 13 und einem Treibelement 14. Der Antrieb 11 ist ein Elektromotor mit einer Leistung von 600 W und wird durch ein nicht dargestelltes Kabel mit Energie versorgt. Oben an dem Gehäuse 9 ist ein Taster 15 zum Einschalten des Antriebs 11 angeordnet.

Die Pumpe 12 ist eine Radialpumpe mit einem zylindrischen Gehäuse 16 und einem um die Hochachse 2 von dem Antrieb 11 angetriebenen Pumpenrad 17. Das Gehäuse 16 weist innen einen Durchmesser 18 von 70 mm und eine Höhe 19 von 14 mm sowie 32 vertikal verlaufende Durchlässe 20 radial nach außen auf. Vor den Durchlässen 20 ist ein nicht dargestellter Filter fest mit dem Gehäuse 16 verbunden. Der Filter besteht aus einem Edelstahldrahtgewebe. Das Pumpenrad 17 weist einen Durchmesser 21 von 64 mm und eine Höhe 22 von 12 mm und 24 unter einem Teller 23 angeformte, radial verlaufende Schaufeln 24 auf.

Mittig zwischen den Schaufeln 24 weist das Pumpenrad 17 einen das Gehäuse 16 nach unten durchdringenden Stutzen 25 auf, an dem ein tellerförmiges Zerkleinerungselement 26 angebracht ist. Das Zerkleinerungselement 26 ist an seiner Unterseite als Raspel mit einer nicht dargestellten spiraligen Verzahnung ausgebildet. Die Mischkammer 13 weist in Richtung der Hochachse 2 einen quadratischen Querschnitt mit einer Kantenlänge 27 von 44 mm und gerundeten Ecken sowie eine Höhe 28 von 57 mm auf.

Das Treibelement 14 besteht aus einer Führungsplatte 29 und einem Treibspiegel 30. Der Treibspiegel 30 weist einen Führungsstutzen 31 mit einem sternförmigen Querschnitt auf, der in einem Durchgangsloch 32 der Führungsplatte 29 geführt ist und in einem Anschlag 33 endet.

Zur Ausführung eines erfindungsgemäßen Verfahrens wird der Vorratsbehälter 3 bis zu der Füllmarke 8 mit Wasser 34 gefüllt und eine aus Pflanzenteilen gepresste Tablette 35 in die Mischkammer 13 eingelegt, die Führungsplatte 29 in die Mischkammer 13 mit einer nicht dargestellten Bajonettverbindung eingerastet und die Mischeinheit 4 wie in Figur 2a/b gezeigt auf den Vorratsbehälter 3 aufgesetzt und mit zwei nicht dargestellten Klammern dicht mit dem Vorratsbehälter 3 verbunden. Die Tablette 35 liegt dann etwa zur Hälfte unter einem Spiegel 36 des Wassers 34 in dem Vorratsbehälter 3.

Mit dem Start des Antriebs 11 bei einer Drehzahl von 10.000 U/min erzeugt die Pumpe 12 in der zunächst noch luftgefüllten Mischkammer 13 einen Unterdruck, der das Wasser 34 aus dem Vorratsbehälter 3 durch die Führungsplatte 29, um den Treibspiegel 30 herum und durch die Mischkammer 13 zu dem Zerkleinerungselement 26 und weiter zu den Schaufeln 24 saugt. Der gleichfalls von dem Unterdruck angesaugte Treibspiegel 30 presst die Tablette 35 an das mit dem Pumpenrad 17 rotierende Zerkleinerungselement 26, dessen Verzahnung die Tablette 35 und die Pflanzenteile sukzessiv abraspelt und mechanisch zerkleinert.

Das über das Zerkleinerungselement 26 strömende Wasser 34 mischt sich mit den Pflanzenteilen und die Mischung wird von den Schaufeln 24 durch den Filter gepresst, der einen nicht dargestellten Trester zurückhält und nur die gleichfalls nicht dargestellte Suspension durchlässt. Grobe Pflanzenteile verbleiben im Zwischenraum zwischen den Schaufeln 24 und dem Filter und werden von dem rotierenden Pumpenrad 17 weiter mechanisch zerkleinert. Die Suspension fließt durch die Durchlässe 20 radial nach außen aus dem Gehäuse 16 ab, läuft nach unten zurück in den Vorratsbehälter 3 und mischt sich dort mit dem Wasser 34.

Wenn die Tablette 35 abgeraspelt ist, schlägt zugleich der Anschlag 33 an der Führungsplatte 29 an und vermeidet so eine Beschädigung des Treibspiegels 30. Das Drehmoment der Pumpe 12 sinkt dadurch schlagartig und der Antrieb 11 schaltet sich automatisch ab. Die Mischeinheit 4 wird nun von dem Vorratsbehälter 3 gelöst und abgenommen und die verzehrfertige Suspension kann aus dem Vorratsbehälter 3 ausgeschenkt werden. Zur leichteren Handhabung kann der Vorratsbehälter 3 mittels eines nicht dargestellten Deckels mit einer Ausgusstülle verschlossen werden.

Zum Reinigen der Vorrichtung 1 wird die Vorrichtung 1 und insbesondere die Mischeinheit 4 in die in Figur 3a/b gezeigten Einzelteile zerlegt:
Die Bajonettverbindung der Führungsplatte 29 an der Mischkammer 13 wird gelöst und das Treibelement 14 von der Mischkammer 13 und diese gleichfalls in einer nicht dargestellten Bajonettverbindung von dem Gehäuse 16 getrennt. Das mit dem Stutzen des Pumpenrads 17 formschlüssig verbundene und an diesem magnetisch gehalterte Zerkleinerungselement 26 wird abgenommen, das Gehäuse 16 wird in einer wiederum nicht dargestellten Bajonettverbindung von dem Gehäuse 9 getrennt, der Filter wird aus dem Gehäuse 16 entnommen, das Pumpenrad 17 wird von dem Antrieb 11 abgezogen und die Dichtung 10 wird von dem Gehäuse 9 abgenommen.

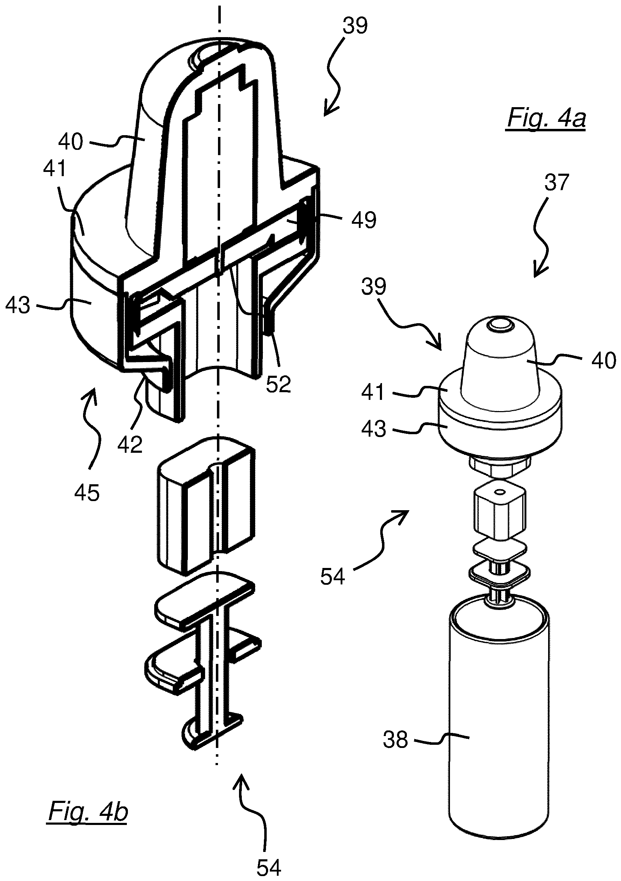

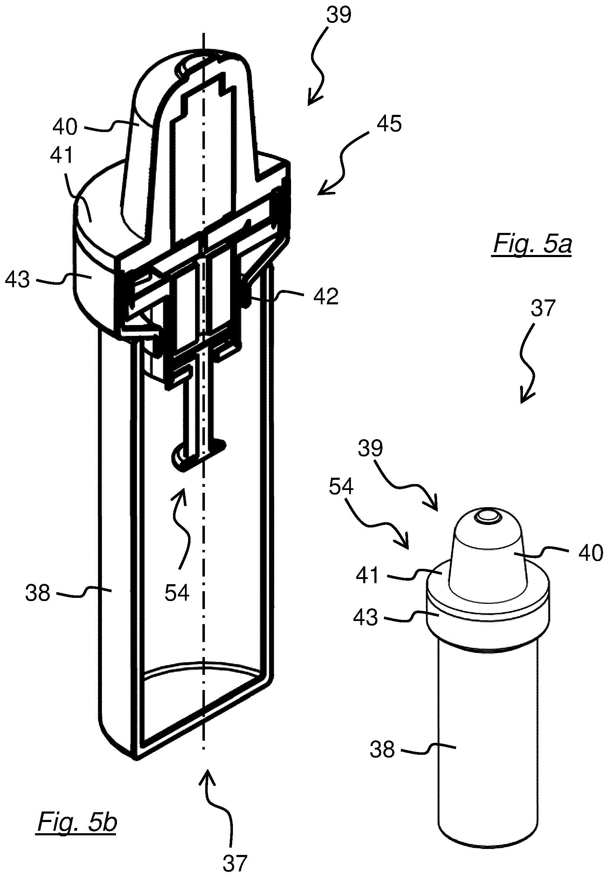

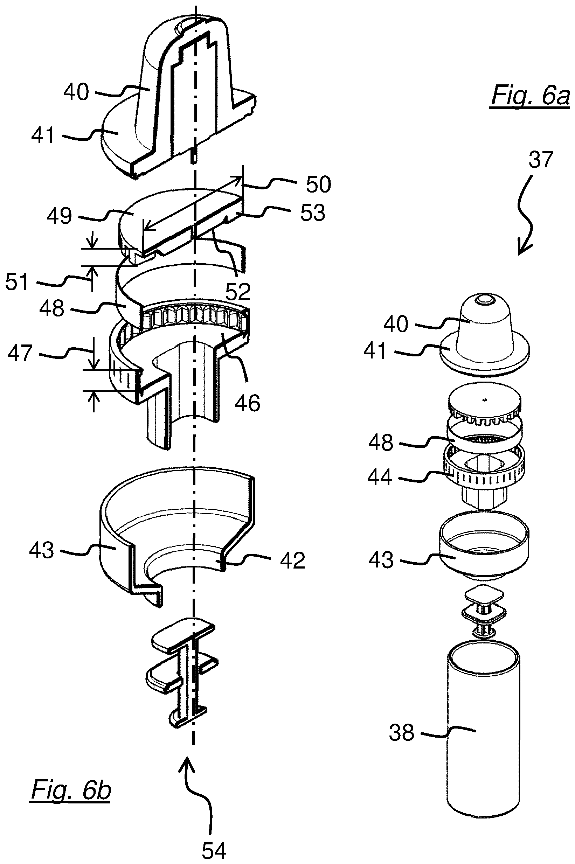

Die entsprechend der ersten Vorrichtung 1 in den Figuren 4a und 4b geöffnet, in den Figuren 5a und 5b geschlossen und in den Figuren 6a und 6b in ihren Einzelteilen gezeigte zweite erfindungsgemäße Vorrichtung 37 entspricht im Wesentlichen der ersten Vorrichtung 1, unterscheidet sich von dieser aber in einigen Details:
Der Vorratsbehälter 38 ist ein gerader Kreiszylinder. Das zweiteilige Gehäuse 39 besteht aus einem glockenförmigen Antriebsgehäuse 40, das unten hutförmig mit einer breiten Krempe 41 erweitert ist, an die ein zunächst zylindrisches, dann konisch zulaufendes und schließlich in einem zylindrischen Stutzen 42 endendes Ablaufgehäuse 43 anschließt.

Das Gehäuse 44 der von dem Ablaufgehäuse 43 umschlossenen Pumpe 45 weist innen einen Durchmesser 46 von 104 mm und eine Höhe 47 von 13 mm auf. In das Gehäuse 44 ist ein Filter 48 aus einem Edelstahldrahtgewebe lose eingelegt. Das Pumpenrad 49 weist einen Durchmesser 50 von 100 mm und eine Höhe 51 von 12 mm auf. Das Zerkleinerungselement 52 ist in das Pumpenrad 49 integriert, die Schaufeln 53 sind radial außerhalb des Zerkleinerungselements angeordnet.

Die Ausführung eines erfindungsgemäßen Verfahrens mit der zweiten Vorrichtung 37 unterscheidet sich von der Ausführung mit der ersten Vorrichtung 1 in weiteren Details: Die Mischeinheit 54 wird wie in Figur 5a/b gezeigt ohne Dichtelement auf den Vorratsbehälter 38 lose aufgesetzt und die Suspension fließt aus dem Gehäuse 44 zunächst durch das Ablaufgehäuse 43 zurück in den Vorratsbehälter 38. Zum Reinigen wird wie in Figur 6a/b gezeigt das Ablaufgehäuse 43 von dem Antriebsgehäuse 40 getrennt und der Filter 48 aus dem Gehäuse 44 entnommen.

Nach Reinigung der Einzelteile unter fließendem Wasser 34 oder in der Spülmaschine werden die Vorrichtungen 1, 37 zur erneuten Verwendung in jeweils umgekehrter Reihenfolge wieder zusammengesetzt.

In anderen erfindungsgemäßen Verfahren werden mit den Vorrichtungen 1, 37 anstelle der Tablette 35 lose grobe Pflanzenteile - beispielsweise eine Mischung ganzer Nüsse, Kerne und Mandeln - verarbeitet.

Weitere, nicht dargestellte erfindungsgemäßen Vorrichtungen entsprechen im Wesentlichen einer der vorgenannten Vorrichtungen 1, 37, weisen aber abweichend anstelle des Gehäuses 9 mit dem Antrieb 11 an der Pumpe 12, 45 einen Adapter für einen handelsüblichen Stabmixer oder für das Wasser 34 im Treibspiegel 30 eine Durchgangsöffnung oder Nuten auf dem Treibspiegel 30 oder keinen Treibspiegel auf.

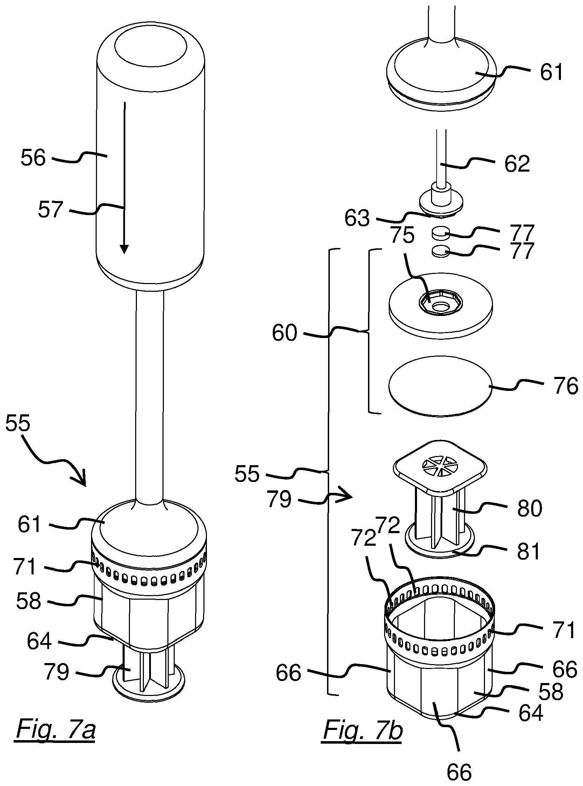

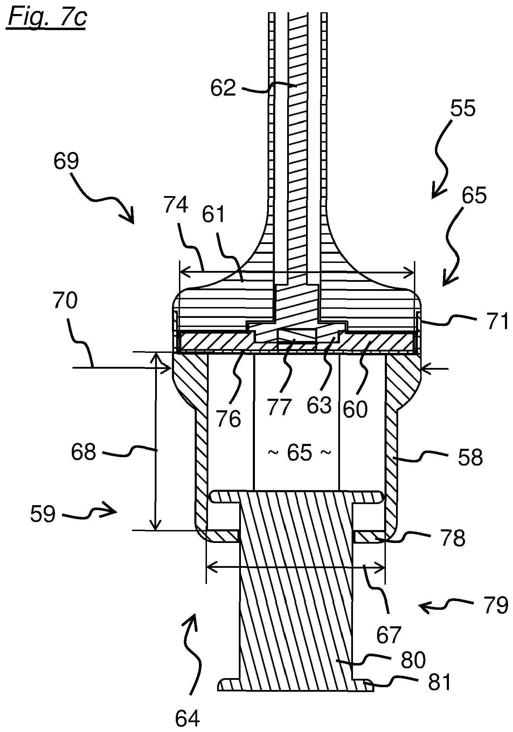

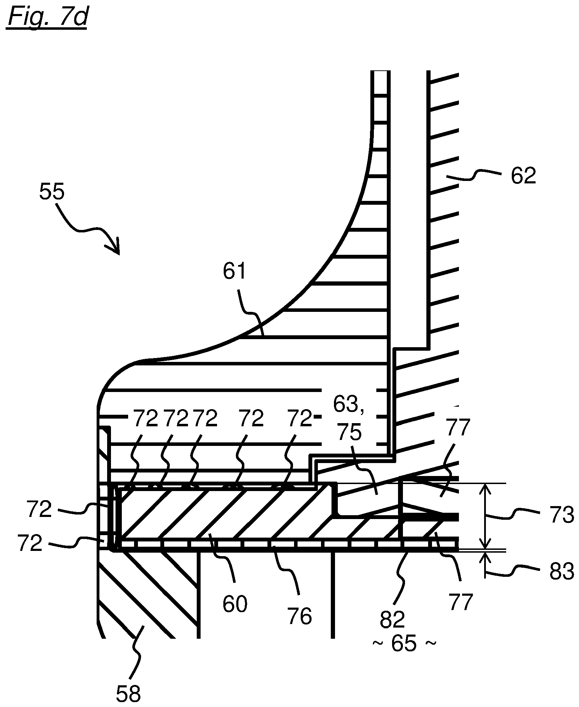

Die in den Figuren 7a bis 7d gezeigte dritte erfindungsgemäße Vorrichtung 55 ist an einem stilisiert dargestellten, handelsüblichen Stabmixer 56 angebracht. Sie besteht aus einem um eine Längsrichtung 57 des Stabmixers 56 drehsymmetrischen Gehäuse 58, einem Treibelement 59 und einem runden Pumpenrad 60, die im Wesentlichen aus Kunststoff bestehen.

Der Stabmixer 56 weist eine Leistung von 600 W auf und wird durch ein nicht dargestelltes Kabel mit Energie versorgt. Ein Anschlussdeckel 61 des Stabmixers 56 weist auf seinem Umfang einen nicht dargestellten Bajonettverschluss auf. Durch den Anschlussdeckel 61 ist in der Längsrichtung 57 eine Antriebswelle 62 mit einem Stutzen 63 zur verdrehfesten Aufnahme verschiedener insoweit standardisierter, nicht dargestellter Anbauteile geführt.

Das Gehäuse 58 umschließt eine Mischkammer 65, die in der Längsrichtung 57 einen an den Ecken 66 gerundeten, quadratischen Querschnitt mit einer Kantenlänge 67 von 44 mm und eine Höhe 68 von 57 mm aufweist. An der Oberseite 69 ist das Gehäuse 58 bis auf einen Durchmesser 70 von 65 mm verdickt und geht in einen kreiszylindrischen Kragen 71 über. Der Kragen 71 weist einen Kranz von 32 vertikal verlaufenden Durchlässe 72 radial nach außen und darüber das nicht im Detail dargestellte Gegenstück zum Bajonettverschluss des Anschlussdeckels 61 auf.

Das Pumpenrad 60 weist eine Dicke 73 von 4 mm und einen Durchmesser 74 von 60 mm, eine zu dem Stutzen 63 passende achteckige Vertiefung 75 und eine aufgeklebte Raspel 76 aus Zirkonkeramik mit einer nicht dargestellten spiraligen Verzahnung auf. In die Vertiefung 75 und in den Stutzen 63 sind Zirkonmagnete 77 eingearbeitet, die nach Anbringen der Vorrichtung 55 an dem Stabmixer 56 das Pumpenrad 60 an der Antriebswelle 62 halten.

Das Treibelement 59 besteht aus einer das Gehäuse 58 unten abschließenden Führungsplatte 78 und einem Treibspiegel 79. Der Treibspiegel 79 weist einen Führungsstutzen 80 mit einem sternförmigen Querschnitt auf, der durch die Führungsplatte 78 geführt ist und in einem Anschlag 81 endet. Der Anschlag 81 vermeidet ein Trennen des Treibspiegels 79 von dem Gehäuse 58.

Zur Ausführung eines erfindungsgemäßen Verfahrens wird eine Portion Pflanzenteile in das von dem Treibspiegel 79 unten geschlossene Gehäuse 58 eingelegt, das Pumpenrad 60 an der Antriebswelle 62 und das Gehäuse 58 an dem Anschlussdeckel 61 angebracht und die Vorrichtung 55 in einen nicht dargestellten Vorratsbehälter unter Wasser gehalten. Zwischen der Raspel 76 und dem Gehäuse 58 verbleibt dabei ein ringförmiger Spalt 82 mit einem Spaltmaß 83 von 0,2 mm.

Mit dem Start des Stabmixers 56 bei einer Drehzahl von 10.000 U/min erzeugt das Pumpenrad 60 in dem Spalt 82 eine radiale Strömung und in der Mischkammer 65 einen Unterdruck, der das Wasser aus dem Vorratsbehälter durch die Unterseite 64 des Gehäuses 58, um den Treibspiegel 79 herum und durch die Mischkammer 65 zu dem Pumpenrad 60 saugt. Der gleichfalls von dem Unterdruck angesaugte Treibspiegel 79 presst die Pflanzenteile an das rotierende Pumpenrad 60, das diese als Zerkleinerungselement sukzessiv abraspelt und mechanisch zerkleinert.

Das über das Pumpenrad 60 strömende Wasser mischt sich mit den zerkleinerten Pflanzenteilen. Die Mischung wird durch den im Spalt 82 erzeugten Sog durch diesen gesaugt, wobei der Spalt 82 grobe Bestandteile ("Trester") zurückhält und nur die gleichfalls Suspension durchlässt. Die Suspension fließt durch die Durchlässe 72 radial nach außen aus dem Gehäuse 58 ab, strömt zurück in den Vorratsbehälter und mischt sich dort mit dem Wasser. Das Wasser, die Pflanzenteile, die Suspension und der Trester sind nicht dargestellt.

Wenn die Pflanzenteile abgeraspelt sind, schlägt der Anschlag 81 an der Unterseite 64 des Gehäuses 58 an und vermeidet so eine Beschädigung des Treibspiegels 79. Das Drehmoment des Stabmixers 56 sinkt dadurch schlagartig, die Drehzahländerung ist ein akustisches Signal zum Abschalten. Die Vorrichtung 55 wird nun aus dem Vorratsbehälter entnommen und die trinkfertige Suspension kann aus dem Vorratsbehälter ausgeschenkt werden. Zur leichteren Handhabung kann der Vorratsbehälter eine Ausgusstülle aufweisen.

Zum Reinigen der Vorrichtung 55 wird zunächst die Bajonettverbindung des Gehäuses 58 an dem Anschlussdeckel 61 gelöst und das Pumpenrad 60 von der Antriebswelle 62 abgenommen. In dem Gehäuse 58 verbliebener Trester wird herausgeschüttelt. Nach Reinigung der Einzelteile unter fließendem Wasser oder in der Spülmaschine wird die Vorrichtung 55 zur erneuten Verwendung in jeweils umgekehrter Reihenfolge wieder zusammengesetzt.

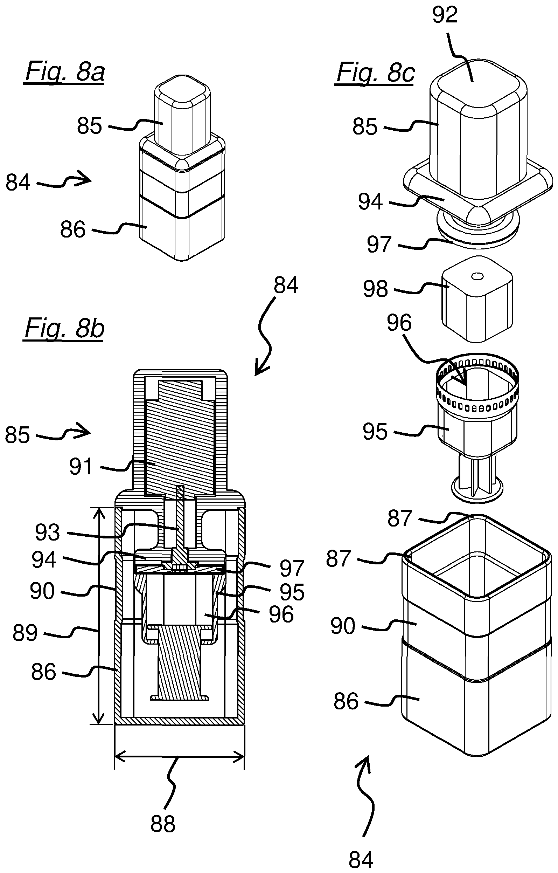

Die in den Figuren 8a bis 8c gezeigte vierte erfindungsgemäße Vorrichtung 84 entspricht im Wesentlichen der dritten Vorrichtung 55, weist aber anstelle des Stabmixers 56 einen integrierten Antrieb 85 und einen gerad-zylindrischen Vorratsbehälter 86 auf, der mit dem Antrieb 85 dicht verschließbar ist.

Der Vorratsbehälter 86 weist einen an den Ecken 87 gerundeten, quadratischen Querschnitt mit einer Kantenlänge 88 von 90 mm, einer Höhe 89 von 150 mm und eine umlaufende Griffmulde 90 sowie ein Fassungsvermögen von 500 ccm auf.

Eine weitere, nicht gezeigte erfindungsgemäße Vorrichtung entspricht im Wesentlichen der vierten Vorrichtung 84, weist aber einen Vorratsbehälter mit einer Höhe von 220 mm und ein Fassungsvermögen von 1000 ccm auf.

Der Antrieb 85 weist einen Elektromotor 91 mit einer Leistung von 600 W auf, der durch ein nicht dargestelltes Kabel mit Energie versorgt wird. Oben an dem Antrieb 85 ist ein Taster 92 zum Einschalten des Antriebs angeordnet. Unten an dem Antrieb 85 ist eine Antriebswelle 93 des Elektromotors durch einen Anschlussdeckel 94 für das Gehäuse 95 mit der Mischkammer 96 geführt. An der Antriebswelle 93 ist das Pumpenrad 97 abnehmbar angebracht.

In Figur 8c ist beispielhaft eine in Form einer Tablette 98 gepresste Portion Pflanzenteile dargestellt. In erfindungsgemäßen Verfahren werden mit den erfindungsgemäßen Vorrichtungen 55, 84 derartigen Tabletten 98 oder nicht dargestellte lose grobe Pflanzenteile - beispielsweise eine Mischung ganzer Nüsse, Kerne und Mandeln - verarbeitet.

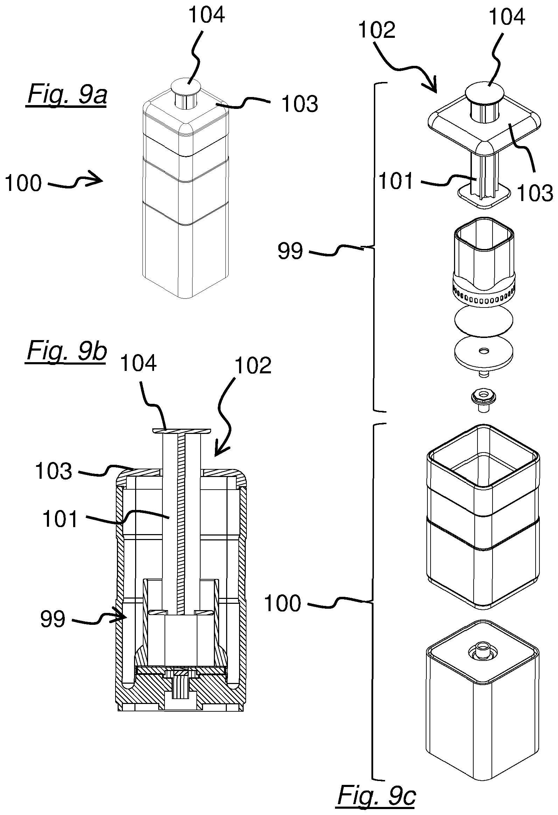

Die in den Figuren 9a bis 9c gezeigt fünfte erfindungsgemäße Vorrichtung 99 entspricht gleichfalls im Wesentlichen der dritten Vorrichtung 55, ist aber als Anbauteil an einem stilisiert dargestellten, handelsüblichen Standmixer 100 angebracht. Der Führungsstutzen 101 des Treibelements 102 der fünften Vorrichtung 99 ist durch den Deckel 103 des Standmixers 100 nach außen geführt. Wenn die Pflanzenteile abgeraspelt sind, schlägt der Anschlag 104 auf dem Deckel 103 an.

In den Figuren sind
- 1: Vorrichtung
- 2: Hochachse
- 3: Vorratsbehälter
- 4: Mischeinheit
- 5: Griffmulde
- 6: Rand
- 7: Höhe
- 8: Füllmarke
- 9: Gehäuse
- 10: Dichtung
- 11: Antrieb
- 12: Pumpe
- 13: Mischkammer
- 14: Treibelement
- 15: Taster
- 16: Gehäuse
- 17: Pumpenrad
- 18: Durchmesser
- 19: Höhe
- 20: Durchlass
- 21: Durchmesser
- 22: Höhe
- 23: Teller
- 24: Schaufel
- 25: Stutzen
- 26: Zerkleinerungselement
- 27: Kantenlänge
- 28: Höhe
- 29: Führungsplatte
- 30: Treibspiegel
- 31: Führungsstutzen
- 32: Durchgangsloch
- 33: Anschlag
- 34: Wasser
- 35: Tablette
- 36: Spiegel
- 37: Vorrichtung
- 38: Vorratsbehälter
- 39: Gehäuse
- 40: Antriebsgehäuse
- 41: Krempe
- 42: Stutzen
- 43: Ablaufgehäuse
- 44: Gehäuse
- 45: Pumpe
- 46: Durchmesser
- 47: Höhe
- 48: Filter
- 49: Pumpenrad
- 50: Durchmesser
- 51: Höhe
- 52: Zerkleinerungselement
- 53: Schaufel
- 54: Mischeinheit
- 55: Vorrichtung
- 56: Stabm ixer
- 57: Längsrichtung
- 58: Gehäuse
- 59: Treibelement
- 60: Pumpenrad
- 61: Anschlussdeckel
- 62: Antriebswelle
- 63: Stutzen
- 64: Unterseite
- 65: Mischkammer
- 66: Ecke
- 67: Kantenlänge
- 68: Höhe
- 69: Oberseite
- 70: Durchmesser
- 71: Kragen
- 72: Durchlass
- 73: Dicke
- 74: Durchmesser
- 75: Vertiefung
- 76: Raspel
- 77: Zirkonmagnet
- 78: Führungsplatte
- 79: Treibspiegel
- 80: Führungsstutzen
- 81: Anschlag
- 82: Spalt
- 83: Spaltmaß
- 84: Vorrichtung
- 85: Antrieb
- 86: Vorratsbehälter
- 87: Ecke
- 88: Kantenlänge
- 89: Höhe
- 90: Griffmulde
- 91: Elektromotor
- 92: Taster
- 93: Antriebswelle
- 94: Anschlussdeckel
- 95: Gehäuse
- 96: Mischkammer
- 97: Pumpenrad
- 98: Tablette
- 99: Vorrichtung
- 100: Standmixer
- 101: Führungsstutzen
- 102: Treibelement
- 103: Deckel
- 104: Anschlag

## Patentansprüche

1. Verfahren zum Herstellen einer Suspension, wobei mittels einer Pumpe (12, 45) Wasser (34) aus einem Vorratsbehälter (3, 38, 86) durch eine Mischkammer (13, 65, 96) gefördert wird und Pflanzenteile von echten Nüssen, Kernen, Getreide und/oder weiteren Samen mittels eines Zerkleinerungselements (26, 52) mechanisch zerkleinert und in der Mischkammer (13, 65, 96) mit dem Wasser (34) vermischt werden und die Mischung durch einen Filter (48) gepresst wird, der die Suspension durchlässt und einen von den Pflanzenteilen verbleibenden Trester zurückhält, ***dadurch gekennzeichnet, dass*** ein Pumpenrad (17, 49, 60, 97) der Pumpe (12, 45) das Zerkleinerungselement (26, 52) ist.

2. Verfahren nach dem vorgenannten Anspruch, ***dadurch gekennzeichnet, dass*** die Suspension aus der Mischkammer (13, 65, 96) in einen Auffangbehälter strömt.

3. Verfahren nach dem vorgenannten Anspruch, ***dadurch gekennzeichnet, dass*** der Vorratsbehälter (3, 38, 86) der Auffangbehälter ist.

4. Verfahren nach einem der vorgenannten Ansprüche, ***dadurch gekennzeichnet, dass*** die Pflanzenteile in Form einer Tablette (35, 98) gepresst und getrocknet werden und die Tablette (35, 98) in die Mischkammer (13, 65, 96) eingebracht und mittels des Zerkleinerungselements (26, 52) zerkleinert wird.

5. Vorrichtung (1, 37, 55, 84, 99) zum Herstellen einer Suspension mit einem Zerkleinerungselement (26, 52) zum Zerkleinern von Pflanzenteilen von echten Nüssen, Kernen, Getreide und/oder weiteren Samen, mit einer Mischkammer (13, 65, 96) zum Mischen der zerkleinerten Pflanzenteile mit Wasser (34), mit einem Filter (48), der die Suspension durchlässt und einen von den Pflanzenteilen verbleibenden Trester zurückhält, und mit einer Pumpe (12, 45) zum Pressen des Wassers (34) aus einem Vorratsbehälter (3, 38, 86) durch die Mischkammer (13, 65, 96) und den Filter (48), ***dadurch gekennzeichnet, dass*** ein Pumpenrad (17, 49, 60, 97) der Pumpe (12, 45) das Zerkleinerungselement (26, 52) ist.

6. Vorrichtung (1, 37, 55, 84, 99) nach dem vorgenannten Anspruch, ***dadurch gekennzeichnet, dass*** das Zerkleinerungselement (26, 52) eine Raspel (76) ist.

7. Vorrichtung (1, 37, 55, 84, 99) nach einem der vorgenannten Ansprüche 5-6, ***dadurch gekennzeichnet, dass*** der Filter (48) ein Spalt (82) mit einem Spaltmaß (83) von höchstens 0,5 mm, vorzugsweise höchstens 0,2 mm ist.

8. Vorrichtung (1, 37, 55, 84, 99) nach dem vorgenannten Anspruch, ***dadurch gekennzeichnet, dass*** das Pumpenrad (17, 49, 60, 97) den Spalt (82) begrenzt.

9. Vorrichtung (1, 37, 55, 84, 99) nach einem der Ansprüche 5 bis 8, ***dadurch gekennzeichnet, dass*** die Mischkammer (13, 65, 96) in einer vertikalen Achsrichtung einen konstanten, endlich, vorzugsweise höchstens sechszählig drehsymmetrischen Querschnitt aufweist.

10. Vorrichtung (1, 37, 55, 84, 99) nach einem der Ansprüche 5 bis 9, ***gekennzeichnet durch*** ein in der Mischkammer (13, 65, 96) axial bewegliches und die Mischkammer (13, 65, 96) unter den Pflanzenteilen überwiegend schließendes Treibelement (14, 59, 102).

11. Vorrichtung (1, 37, 55, 84, 99) nach einem der Ansprüche 5 bis 10, ***dadurch gekennzeichnet, dass*** der Antrieb (11, 85), ein Gehäuse (16, 44, 58, 95) mit der Mischkammer (13, 65, 96), das Pumpenrad (17, 49, 60, 97) und/oder der Vorratsbehälter (3, 38, 86) mittels Wechselverbindungen, insbesondere Klipp-, Klemm-, Klammer-, Magnet- oder Bajonettverbindungen verbunden sind.

## Claims

1. A method for producing a suspension, wherein water (34) is fed by a pump (12, 45) from a storage container (3, 38, 86) through a mixing chamber (13, 65, 96) and plant parts from real nuts, kernels, grains, and/or seeds are mechanically comminuted by comminuting element (26, 52) and mixed with the water in the mixing chamber (13, 65, 96) and the mix is pressed through a filter (48) that passes the suspension through and retains a pomace that remains from the plant parts, **characterized in that** a pump wheel (17, 49, 60, 97) of the pump (12, 45) forms the comminuting element (26, 52).

2. The method according to the preceding claim, **characterized in that** the suspension flows from the mixing chamber (13, 65, 96) into a capture container.

3. The method according to the preceding claim **characterized in that** the storage container (3, 38, 86) is the capture container.

4. The method according to one of the preceding claims, **characterized in that** the plant parts are pressed into a shape of a tablet (35, 98) and dried and the tablet (35, 98) is introduced into the mixing chamber (13, 65, 96) and comminuted by the comminuting element (26, 52).

5. A device (1, 37, 55, 84, 99) for producing a suspension, the device comprising a comminuting element (26, 52) for comminuting plant parts from real nuts, kernels, grains, and/or other seeds, a mixing chamber (13, 65, 96) for mixing the comminuted plant parts with water (34), a filter (48) that passes the suspension through and retains a pomace remaining from the plant parts, and a pump (12, 45) for pressing the water (34) from a storage container (3, 38, 86) through the mixing chamber (13, 65, 96) and the filter (48), **characterized in that** a pump wheel (17, 49, 60, 97) of the pump (12, 45) is the comminuting element.

6. The device (1, 37, 55, 84, 99) according to the preceding claim, **characterized in that** the comminuting element (26, 52) is a rasp (76).

7. The device according to one of the preceding claims 5 - 6 **characterized in that** the filter (48) is gap (82) with a gap dimension (83) of 0.5 mm at the most, advantageously 0.2 mm at the most.

8. The device (1, 37, 55, 84, 99) according to the preceding claim, **characterized in that** the pump wheel (17, 49, 60, 97) defines the gap (82).

9. The device (1, 37, 55, 84, 99) according to one of the claims 5-8 **characterized in that** the mixing chamber (13, 65, 96) has a constant, advantageously at the most sixfold rotation symmetrical cross section in a vertical axial direction.

10. The device (1, 37, 55, 84, 99) according to one of the claims 5-9 **characterized by** a drive element (14, 59, 102) axially movable in the mixing chamber (13, 65, 96) and substantially closing the mixing chamber (13, 65, 96) below the plant parts.

11. The device (1, 37, 55, 84, 99) according to one of the claims 5-10, **characterized in that** the drive (11, 85), a housing (16, 44, 58, 95) with the mixing chamber (13, 65, 96), the pump wheel (17, 49, 60, 97), and/or the storage container (3, 38, 86) are connected by disengageable connections, in particular snapped-, clamped-, magnet-, or bayonet-connections.

## Revendications

1. Procédé, destiné à préparer une suspension, au moyen d'une pompe (12, 45,) de l'eau (34) étant convoyée à partir d'un réservoir de stockage (3, 38, 86) à travers une chambre de mélange (13, 65, 96) et des parties de végétaux de véritables fruits à coque, graines, céréales et / ou autres semences étant mécaniquement concassées au moyen d'un élément concasseur (26, 52) et mélangées avec l'eau (34) dans la chambre de mélange (13, 65, 96) et le mélange étant pressé à travers un filtre (48) qui laisse passer la suspension et qui retient un marc restant des parties de végétaux, **caractérisé en ce qu'**une roue de pompe (17, 49, 60, 97) de la pompe (12, 45) est l'élément concasseur (26, 52).

2. Procédé selon la revendication précédente, **caractérisé en ce que** la suspension s'écoule hors de la chambre de mélange (13, 65, 96) dans un récipient collecteur.

3. Procédé selon la revendication précédente, **caractérisé en ce que** le réservoir de stockage (3, 38, 86) est le récipient collecteur.

4. Procédé selon l'une quelconque des revendications précédentes, **caractérisé en ce que** les parties de végétaux sont pressées sous la forme d'un comprimé (35, 98) et séchées et le comprimé (35, 98) est introduit dans la chambre de mélange (13, 65, 96) et concassé au moyen de l'élément concasseur (26, 52).

5. Dispositif (1, 37, 55, 84, 99), destiné à préparer une suspension, pourvu d'un élément concasseur (26, 52) pour concasser des parties de végétaux de véritables fruits à coque, graines, céréales et / ou autres semences, pourvu d'une chambre de mélange (13, 65, 96) pour mélanger les parties de végétaux concassées avec l'eau (34), pourvu d'un filtre (48), qui laisse passer la suspension et qui retient un marc restant des parties de végétaux et pourvu d'une pompe (12, 45) pour presser l'eau (34) hors d'un réservoir de stockage (3, 38, 86) à travers la chambre de mélange (13, 65, 96) et le filtre (48), **caractérisé en ce qu'**une roue de pompe (17, 49, 60, 97) de la pompe (12, 45) est l'élément concasseur (26, 52).

6. Dispositif (1, 37, 55, 84, 99) selon la revendication précédente, **caractérisé en ce que** l'élément concasseur (26, 52) est une râpe (76).

7. Dispositif (1, 37, 55, 84, 99) selon l'une quelconque des revendications précédentes, **caractérisé en ce que** le filtre (48) est une fente (82) avec une dimension de fente (83) d'au maximum 0,5 mm, de préférence d'au maximum 0,2 mm.

8. Dispositif (1, 37, 55, 84, 99) selon la revendication précédente, **caractérisé en ce que** la roue de pompe (17, 49, 60, 97) délimite la fente (82).

9. Dispositif (1, 37, 55, 84, 99) selon l'une quelconque des revendications 5 à 8, **caractérisé en ce que** la chambre de mélange (13, 65, 96) présente dans une direction axiale verticale une section transversale constante, finale, de préférence au plus sextuplement symétrique en rotation.

10. Dispositif (1, 37, 55, 84, 99) selon l'une quelconque des revendications 5 à 9, **caractérisé par** un élément propulseur (14, 59, 102) mobile en direction axiale dans la chambre de mélange (13, 65, 96) et fermant majoritairement la chambre de mélange (13, 65, 96) sous les parties de végétaux.

11. Dispositif (1, 37, 55, 84, 99) selon l'une quelconque des revendications 5 à 10, **caractérisé en ce que** l'entrainement (11, 85), un carter (16, 44, 58, 95) pourvu de la chambre de mélange (13, 65, 96), la roue de pompe (17, 49, 60, 97) et / ou le réservoir de stockage (3, 38, 86) sont assemblés par des assemblages interchangeables, notamment des assemblages par clips, par serrage, par crampons, par aimant ou à baïonnette.
